# EUROPEAN PATENT APPLICATION

(11) **EP 4 428 771 A1**
(43) Date of publication of application: **11.09.2024**
(21) Application number: 22889692.4
(22) Date of filing: 29.09.2022
(51) Int. Cl.: G06Q 10/00

(54) **DATA PROCESSING METHOD, DATA PROCESSING DEVICE, AND COMPUTER PROGRAM**

(30) Priority: 04.11.2021 JP 2021180036
(71) Applicant: Xels Japan Co., Ltd., Tokyo 150-0002 (JP)
(72) Inventor: NOJIMA, Takeshi, Tokyo 150-0002 (JP)
(74) Representative: London IP Ltd
(86) International application number: PCT/JP2022/036396
(87) International publication number: WO 2023/079868

(57) **Abstract**

[Problem] To achieve high reliability in managing a certificate related to suppression of greenhouse gas.

[Solution] A data processing method includes, by a computer 1 connected to a recorder terminal 30 and a distributed database 50 through a network NW, executing: certification data receiving processing S101 of receiving certification data related to a reduction amount of greenhouse gas from the recorder terminal; deposit receiving processing S103 of receiving a deposit from the recorder terminal, the deposit being transmitted in association with the certification data; communication processing S104 of transmitting a storage request of the certification data and deposit processing necessary for the storage request to the distributed database; recording processing S106 of receiving information of a purchaser of the certification data and recording the information of the purchaser in association with the certification data; amortization processing S205 of storing, in the distributed database, amortization information indicating amortization of the certification data in association with the certification data when receiving an amortization command of the certification data; and deposit reimbursement processing S207 of reimbursing the deposit associated with the certification data to the recorder terminal when the amortization information is stored.

## Description

### Technical Field

The present invention relates to a data processing method, a data processing device, and a computer program.

### Background Art

As an effective measure for suppressing emission of greenhouse gas including carbon dioxide and suppressing climate change, standards of carbon credits and emission rights have been developed and spread. The carbon credits and emission rights are certified through strict examination according to international standards, and sold to companies and the like, and problems such as double issuance, double transfer, falsification, and counterfeit copying of certification data occur.

Therefore, there is a need for a highly reliable data processing technique that withstands a management platform of attestation data related to suppression of greenhouse gas, such as carbon credit certificates and emission rights.

### Citation List

### Patent Literature

### Patent Literature 1: JP 2020-027340 A

Patent Literature 1 discloses a certificate management device that includes a storage control unit that stores an issued non-fossil certificate in a ledger included in a blockchain, reduces a time required for issuing the non-fossil certificate, and safely manages the non-fossil certificate.

### Summary of Invention

### Technical Problem

The present invention relates to management of a certificate related to suppression of greenhouse gas, and an object thereof is to realize high reliability.

### Solution to Problem

A data processing method according to one aspect of the present invention is a method including, by a computer connected to a recorder terminal and a distributed database through a network, executing: certification data receiving processing of receiving certification data related to a reduction amount of greenhouse gas from the recorder terminal; deposit receiving processing of receiving a deposit from the recorder terminal, the deposit being transmitted in association with the certification data; communication processing of transmitting a storage request of the certification data and deposit processing necessary for the storage request to the distributed database; recording processing of receiving information of a purchaser of the certification data and recording the information of the purchaser in association with the certification data; amortization processing of storing, in the distributed database, amortization information indicating amortization of the certification data in association with the certification data when receiving an amortization command of the certification data; and deposit reimbursement processing of reimbursing the deposit associated with the certification data to the recorder terminal when the amortization information is stored.

The recording processing refers to the distributed database and may not record the certification data when the same data as the received certification data is recorded.

The recording processing refers to the distributed database and may not change the certification data when the amortization information is associated with the certification data.

The certification data may include information on an amount of the greenhouse gas, and the amortization command may include information on the amount to be amortized and information on the purchaser who holds the amount, in the amortization processing, a part of the certification data may be amortized on the basis of the amount included in the amortization command, and in the deposit reimbursement processing, when all the amount included in the certification data are amortized, the deposit associated with the certification data may be reimbursed to the recorder terminal.

The data processing method may include: further executing code issuing processing of issuing a code associated with the certification data and transmitting the code to the recorder terminal; and receiving an input of the code in the amortization processing, and storing the amortization information in the distributed database only when the code matches the code associated with the certification data included in the amortization command.

The data processing method may include storing a transfer history of the certification data in the distributed database in the recording processing.

A data processing device according to another aspect of the present invention is a data processing device connected to a recorder terminal and a distributed database through a network, the data processing device including: a certification data receiving unit configured to receive certification data related to a reduction amount of greenhouse gas from the recorder terminal; a deposit receiving unit configured to receive a deposit from the recorder terminal, the deposit being transmitted in association with the certification data; a communication processing unit configured to transmit a storage request of the certification data and deposit processing necessary for the storage request to the distributed database; a recording unit configured to receive information of a purchaser of the certification data and record, in the distributed database, the information of the purchaser in association with the certification data; an amortization unit configured to store, in the distributed database, amortization information indicating amortization of the certification data in association with the certification data when receiving an amortization command of the certification data; and a deposit reimbursement unit configured to reimburse the deposit associated with the certification data to the recorder terminal when the amortization information is stored.

A computer program according to still another aspect of the present invention is a computer program for causing a computer connected to a recorder terminal and a distributed database through a network to execute: certification data receiving processing of receiving certification data related to a reduction amount of greenhouse gas from the recorder terminal; deposit receiving processing of receiving a deposit from the recorder terminal, the deposit being transmitted in association with the certification data; communication processing of transmitting a storage request of the certification data and deposit processing necessary for the storage request to the distributed database; recording processing of receiving information of a purchaser of the certification data and recording the information of the purchaser in association with the certification data; amortization processing of storing, in the distributed database, amortization information indicating amortization of the certification data in association with the certification data when receiving an amortization command of the certification data; and deposit reimbursement processing of reimbursing the deposit associated with the certification data to the recorder terminal when the amortization information is stored.

Note that the computer program can be provided by downloading via a network such as the Internet, or can be provided by being recorded on various computer-readable recording media.

### Advantageous Effects of Invention

According to the present invention, it is possible to realize high reliability for management of a certificate related to suppression of greenhouse gas.

### Brief Description of Drawings

Fig. 1 is a functional block diagram illustrating functions of a data processing device according to a first embodiment of the present invention and components connected via a network.
Fig. 2 is a diagram illustrating an example of a data table stored in the data processing device.
Fig. 3 is an example of a sequence diagram illustrating a flow of processing of registering certification data from a recorder terminal connected to the data processing device.
Fig. 4 is an example of a sequence diagram illustrating a flow of processing in which the certification data is amortized.
Fig. 5 is an example of a flowchart illustrating a flow of processing of reimbursing a deposit by the data processing device.

### Description of Embodiments

Hereinafter, an embodiment of a data processing device according to the present invention will be described with reference to the drawings.

### •Data Processing Device-

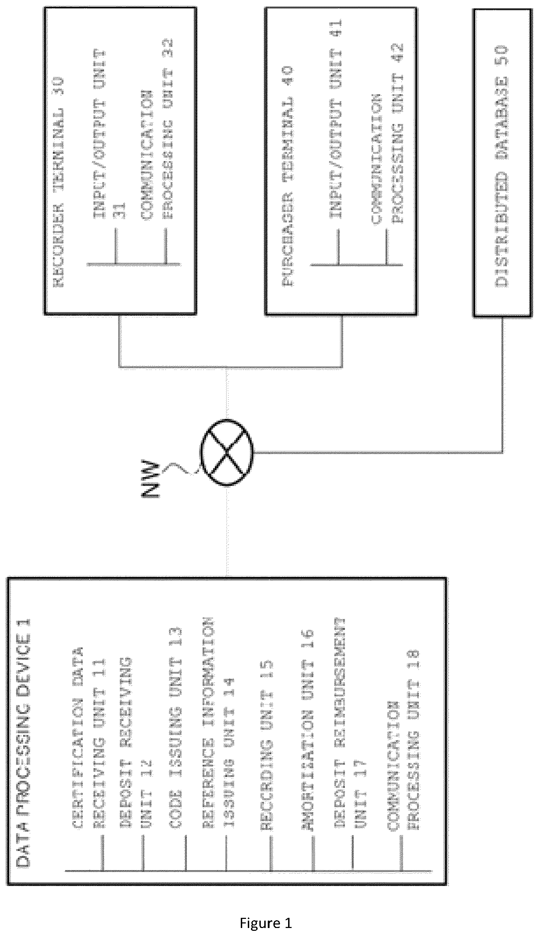

Fig. 1 illustrates a configuration of a data processing device 1 according to an embodiment of the present invention. The data processing device 1 is a device that preserves certification data related to reduction of greenhouse gas recorded by a recorder via a recorder terminal 30 and amortizes the certification data on the basis of a predetermined operation. Here, in the present description, the certification data is a term indicating a superordinate concept including, for example, digital data of a carbon credit certificate or digital data certifying a greenhouse gas emission right. In addition, the certification data includes information of an issuer and a purchaser.

The carbon credit certificate is a certificate that certifies an activity of absorbing or reducing greenhouse gas such as carbon dioxide together with an amount of absorption or reduction. The absorption or reduction is performed by, for example, a company that introduces energy saving equipment or uses renewable energy, a farmer who manages forests by appropriate tree planting, thinning, or the like, a forest owner, or the like. The carbon credit certificate is issued by an examining authority that is a third party and examines materials or data of an issuing project based on a predetermined standard. The carbon credit certificate is issued, for example, as digital data. The carbon credit certificate is purchased by a country or company, and an owner of the carbon credit certificate is paid a predetermined price. According to such a mechanism, a certificate owner who has contributed to the reduction of the greenhouse gas can earn money, and an incentive to contribute to the reduction is generated. In addition, the country or company that has purchased the carbon credit certificate can also indirectly contribute to the reduction of the greenhouse gas by providing money. Eventually, global warming countermeasures by a decentralized mechanism are enhanced.

The greenhouse gas emission right is an asset owned by a country or company that does not exceed any regulation value related to an amount of greenhouse gas emission, and the country or company can sell the emission right to a country or company that exceeds the regulation value. In addition, the emission right is traded between companies as assets. A mechanism in which a concept of the emission right is shared and trading is performed as the assets can also help the global warming countermeasures.

As illustrated in Fig. 1, the data processing device 1 is configured to be communicable with the recorder terminal 30 used by the recorder, a purchaser terminal 40, and a distributed database 50 via a network NW. Communication among the data processing device 1, the recorder terminal 30, the purchaser terminal 40, and the distributed database 50 is wireless in the present embodiment, but some or all connections may be wired.

### •Recorder Terminal 30

The recorder terminal 30 is a terminal operated by the recorder who records the certification data. The recorder is, for example, the examining authority for carbon offset, an examinee who has undergone examination, or an intermediary who records a certificate in the system on behalf of the examinee.

The recorder terminal 30 records the certificate data, which is the digital data, in the data processing device 1. In addition, the recorder terminal 30 transmits a deposit signal for depositing deposit property necessary for generating a record of the certification data in the distributed database 50 at the time of recording the certification data. The deposit property is paid from an account of the recorder, and is managed on the distributed database 50 as, for example, virtual currency, more specifically, cryptocurrency.

The recorder terminal 30 is, for example, a smartphone, a tablet terminal, or a computer. The recorder terminal 30 includes functional blocks including an input/output unit 31 and a communication processing unit 32 using a central processing unit (CPU), a computer program executed by the CPU, a random access memory (RAM) and a read only memory (ROM) that store the computer program and predetermined data, and the like.

The input/output unit 31 is realized by a display and a touch panel for inputting/outputting data, a microphone and a speaker for inputting/outputting audio data, and the like.

The communication processing unit 32 is a processing unit capable of executing data transmission/reception processing according to a predetermined protocol with the data processing device 1 and the distributed database 50 via the network NW such as the Internet, and is realized by an application, a web browser, or the like.

### •Purchaser Terminal 40

The purchaser terminal 40 is a terminal used by the purchaser who has purchased the carbon credit certificate or the emission right certified by the certification data. The purchaser terminal 40 is, for example, a smartphone, a tablet terminal, or a computer. The purchaser terminal 40 includes functional blocks including an input/output unit 41 and a communication processing unit 42 using a central processing unit (CPU), a computer program executed by the CPU, a random access memory (RAM) and a read only memory (ROM) that store the computer program and predetermined data, and the like.

The input/output unit 41 is realized by a display and a touch panel for inputting/outputting data, a microphone and a speaker for inputting/outputting audio data, and the like. The communication processing unit 42 is a processing unit capable of executing data transmission/reception processing according to a predetermined protocol with the data processing device 1 and the distributed database 50 via the network NW such as the Internet, and is realized by an application, a web browser, or the like.

Note that the number of the recorder terminal 30 and the purchaser terminal 40 connected to the data processing device 1 is arbitrary, and each may be plural.

### •Distributed Database 50

The data processing device 1 is connected to at least one of a plurality of management devices constituting the distributed database 50. The distributed database 50 constitutes a blockchain network such as Ethereum that can perform transactions using an existing cryptocurrency using a blockchain, and stores a ledger of the blockchain that records the certification data. Note that transaction using unique virtual currency may be possible. Each of the plurality of management devices stores a plurality of blocks constituting the ledger of the blockchain. Each of the plurality of blocks stores at least one of the certification data and a transfer history of the certification data, for example, as a predetermined number of data. In addition, each of the plurality of blocks includes a hash value of a block generated immediately before, and forms the blockchain. Note that, in the blockchain, the ledger of the certification data and the ledger of the transfer history may be separately managed.

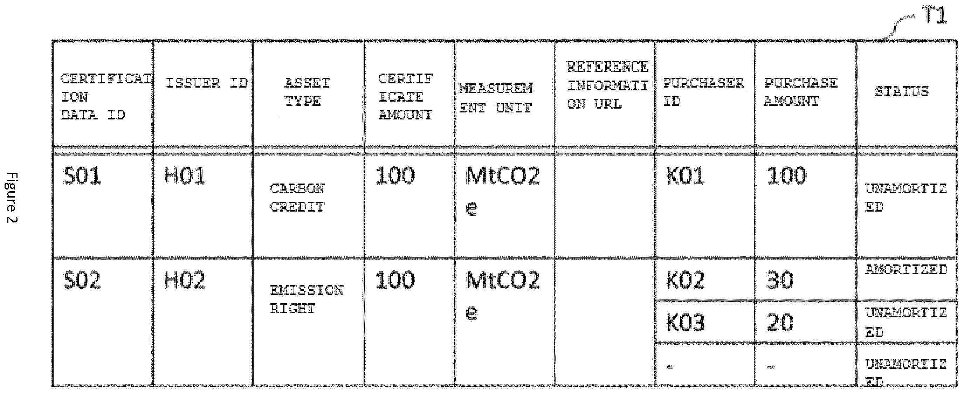

As illustrated in Fig. 2, the distributed database 50 stores identification information of the issuer (also referred to as "issuer ID") and information of the certification data in association with each other. In table T1 stored in the distributed database 50, information included in the certification data, for example, an asset type indicating classification of carbon credits and emission rights, a type of standard used for the examination, the amount of greenhouse gas, a measurement unit, and the like are stored together. In addition, in a case where there is a purchaser who has purchased the certification data, identification information of the purchaser (also referred to as "purchaser ID") is stored in association with the identification information of the issuer. The amount purchased by the purchaser is also stored in the purchaser ID. Note that, in the present embodiment, all the data of the table T1 is stored in the distributed database 50, but a part of the data may be configured to be stored in a storage unit included in the data processing device 1.

A plurality of purchaser IDs may be associated with one certification data ID in the table T1. That is, in the data processing device 1, one piece of certification data can be divided and sold to a plurality of purchasers. The unit of division may be, for example, a unit amount, and may be specifically 1 ton. In the example of Fig. 2, two purchaser IDs "K02" and "K03" are associated with the certification data ID "S02". Further, 30 tons are allocated to "K02", and 20 tons are allocated to "K03".

The certification data is associated with a status for each purchaser, and in the example of the figure, the 30 tons of emission rights held by "K02" are amortized, and the 20 tons of emission rights held by "K03" are unamortized. In addition, in the table T1, a purchase amount may be further divided, and the status may be stored for each unit amount. For example, some of the 30 tons of emission rights held by the purchaser ID "K02" may be stored as having been amortized and the remaining amount may be stored as unamortized. In addition, at the time when the certification data is stored from the recorder terminal 30, the status may be unamortized. In addition, it may be configured such that the status of the amount for which no purchaser is recorded can be registered only as unamortized, and registration of an amortized status is not allowed.

As described above, according to a configuration in which the amount described in the certification data is divided and the purchaser and the status can be stored in association with each unit amount, a necessary amount of transaction can be performed regardless of an issuing unit of the carbon credit certificate or the emission right, and the transaction is highly convenient. In addition, as a result of the transaction being based on the unit amount, a price of the unit amount to be traded can be clearly specified, and thus, consideration of purchase is also easy. Eventually, as a result of widespread transaction, the reduction of the greenhouse gas can be accelerated.

Further, the data stored in the distributed database 50 can be referred to by an appropriate terminal connectable to the distributed database 50. The appropriate terminal may be, for example, a personal computer, a smartphone, or a tablet terminal. The data can be referred to via a software application of a general-purpose web browser and may also be referable to via a dedicated application. According to such a configuration, anyone can refer to the carbon credit certificate and information on the emission right regardless of place and time, and a highly reliable transaction can be realized.

### •Data Processing Device 1

As illustrated in Fig. 1, the data processing device 1 includes functional blocks including a certification data receiving unit 11, a deposit receiving unit 12, a code issuing unit 13, a reference information issuing unit 14, a recording unit 15, an amortization unit 16, a deposit reimbursement unit 17, and a communication processing unit 18.

The certification data receiving unit 11 is a functional unit that receives the certification data to be registered via the recorder terminal 30. The certification data receiving unit 11 can receive the certification data that has undergone examination under various international standards. In the present embodiment, it is assumed that the certification data is issued as the digital data from the examining authority and the digital data is transmitted from the recorder terminal 30, but the present invention is not limited thereto, and it may be configured such that the certification data may be issued on paper, and data extracted from the paper by manual input or by captured data is received.

The deposit receiving unit 12 is a functional unit that receives a deposit transmitted in association with the certification data from the recorder terminal. An amount of the deposit property is determined in accordance with the amount of greenhouse gas included in the certification data, and is presented from the data processing device 1 to the recorder terminal 30.

The code issuing unit 13 is a functional unit that issues a primary code associated with the certification data and transmits the primary code to the recorder terminal 30. The primary code is an example of a code in claims, and includes, for example, alphanumeric characters or symbols, or a combination thereof. Note that the primary code is not limited thereto, and may be a predetermined multidimensional code. The recorder terminal 30 displays the received code and instructs the recorder to store the code by various methods such as display or voice.

The reference information issuing unit 14 is a functional unit that issues reference information for viewing the certification data and information accompanying the certification data stored in the distributed database 50. The information stored in the table T1 can be appropriately viewed from the reference information. The data that can be viewed in the reference information also includes information of the purchaser, and it is clear whether the data is the certification data held by someone by viewing the reference information. That is, it is clear that double transfer is not performed, and reliability of the transaction can be enhanced. A person having the reference information may be any one of the recorder, the purchaser, and other third parties, and can appropriately view the certification data on the basis of the reference information. The reference information includes identification information unique to the certification data, and may be, for example, a combination of alphanumeric characters and the like in which information is displayed by being input at a specific site, or may be a direct URL. In addition, the reference information may be a two-dimensional code that displays a certification data page by scanning with a camera. According to such a configuration, the reliability can be immediately secured even in an actual transaction.

The recording unit 15 is a functional unit that records data received from the recorder terminal 30 or the purchaser terminal 40 in the distributed database 50 included in the data processing device 1. In addition, the recording unit 15 receives the information of the purchaser of the certification data, and records the information of the purchaser in the distributed database 50 in association with the certification data.

The recording unit 15 refers to the distributed database 50 and checks whether the same data has already been registered for the received certification data. The recording unit 15 estimates that the same data is registered when specific information or a plurality of pieces of information among the information included in the certification data match each other. For example, in a case where the identification information is allocated to each certification data, it may be estimated that the data are the same if the identification information matches. Further, the recording unit 15 may estimate that the data are the same in a case where a plurality of pieces of information out of the examination date, the issuance date, the examining authority, the examinee, and the amount match. In a case where the same data is registered, the recording unit 15 does not register the received certification data and this is notified to the recorder terminal 30. According to this configuration, it is possible to prevent double registration of the certification data.

The recording unit 15 may store the transfer history of the certification data in the distributed database 50. According to this configuration, transparency regarding the certification data is further secured. In addition, the recording unit 15 may determine whether the transfer can be made according to the type of the certification data. Specifically, the recording unit 15 may permit the transfer in the digital data of the emission right, update the information of the purchaser, and store the transfer history in the distributed database 50, while disallowing the transfer in the digital data of the carbon credit certificate and not storing the transfer history. According to this configuration, it is possible to construct a system according to an actual situation of the transaction.

The amortization unit 16 is a functional unit that stores amortization information indicating amortization of the certification data in the distributed database 50 in association with the amortization data when receiving an amortization command of the certification data. The recording unit 15 refers to the distributed database 50, and does not change the certification data when the amortization information is associated with the certification data. That is, the amortized certification data is not changed again and the record of the purchaser at the time of the amortization is preserved. Since the amortized certification data is protected so as not to be sold to others, the certification data managed by the data processing method according to the present invention is free from possibility of double transfer or the like, and high reliability can be secured.

The amortization unit 16 may receive an input of the primary code, and may store the amortization information in the distributed database 50 only when the primary code matches the primary code associated with the certification data included in the amortization command. According to this configuration, only a person who knows the primary code can perform a procedure of amortization, and an illegal procedure can be prevented.

The amortization unit 16 may amortize a part of the certification data based on the amount included in the amortization command. The amortization unit 16 can amortize the certification data, for example, for each unit amount. According to this configuration, a necessary amount of transactions can be performed, and spread of transactions is promoted. The amortization unit 16 may notify an error when the amount included in the amortization command exceeds an amount held by the purchaser.

The deposit reimbursement unit 17 is a functional unit that reimburses the deposit property associated with the certification data to the recorder terminal 30 when the amortization information is stored. In a case where the deposit property is managed by the distributed database 50, the deposit reimbursement unit 17 transmits a reimbursement signal of the deposit to the distributed database 50, and transmits the deposit property from the distributed database 50 to the recorder terminal 30.

The deposit reimbursement unit 17 reimburses the deposit associated with the certification data to the recorder terminal 30 when all the amount included in the certification data is amortized. In a case where a part of the amount included in the certification data remains, the deposit is not reimbursed. According to such a configuration, there is a motivation for the recorder to early amortize all the amount, and thus the transaction is promoted.

The communication processing unit 18 is a processing unit capable of executing data transmission/reception processing according to a predetermined protocol with the data processing device 1 and the distributed database 50 via the network NW such as the Internet, and is realized by an application, a web browser, or the like. In particular, the communication processing unit 18 receives the certification data, the primary code, and the amortization command from the recorder terminal 30. Further, the communication processing unit 18 transmits a storage request of the certification data and deposit processing necessary for the storage request to the distributed database 50. Furthermore, the communication processing unit 18 transmits the reimbursement signal of the deposit to the distributed database 50.

### •Flow in which Recorder Terminal 30 Stores Certification Data in Data Processing Device 1

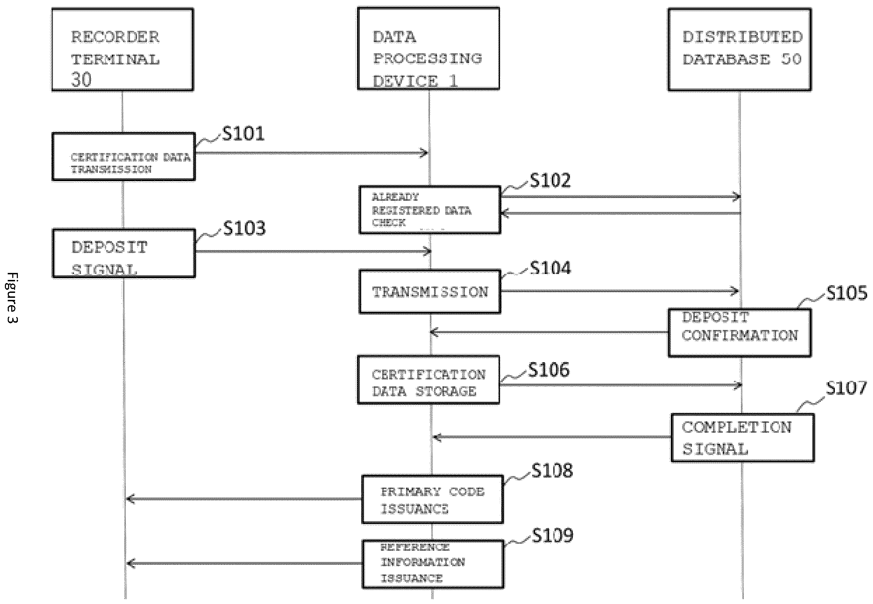

As illustrated in Fig. 3, first, the recorder terminal 30 transmits the certification data to the data processing device 1 (step S101). The certification data includes, for example, information described in the carbon credit certificate, and particularly includes the amount of greenhouse gas.

The data processing device 1 refers to the distributed database 50 and checks whether the received certification data is the same as the data already registered (step S102). In a case where there is no duplication with the data already registered, this is notified to the recorder terminal 30, and transmission of the deposit is promoted. In a case where there is a duplication, a notification of disallowing the registration is transmitted to the recorder terminal 30.

Subsequently, the recorder terminal 30 transmits the deposit signal including information on the deposit property (step S103). The deposit signal is transmitted together with the certification data to the distributed database 50 via the data processing device 1 (step S104). Note that, before step S103, processing may be performed in which the data processing device 1 determines the amount of the deposit property to be deposited according to the amount of greenhouse gas included in the certification data and notifies the recorder terminal 30 of the amount of the deposit property. In this case, a required amount of the deposit property is clear to the recorder.

When the distributed database 50 confirms the amount of the deposit property, a notification that the amount has been confirmed is transmitted to the data processing device 1 (step S105). Subsequently, the data processing device 1 stores the certification data in the distributed database 50 (step S106). The distributed database 50 stores the certification data and transmits a completion signal indicating that the storage is completed to the data processing device 1 (step S107). The data processing device 1 that has received the completion signal issues the primary code and transmits the primary code to the recorder terminal 30 (step S108). Further, at the same time as or after issuance of the primary code, the reference information is issued and transmitted to the recorder terminal 30 (step S109). Note that issuance of the reference information is not limited to the time point, and may be performed at an appropriate timing according to a command from the recorder terminal 30.

### •Flow of Amortization of Certification Data

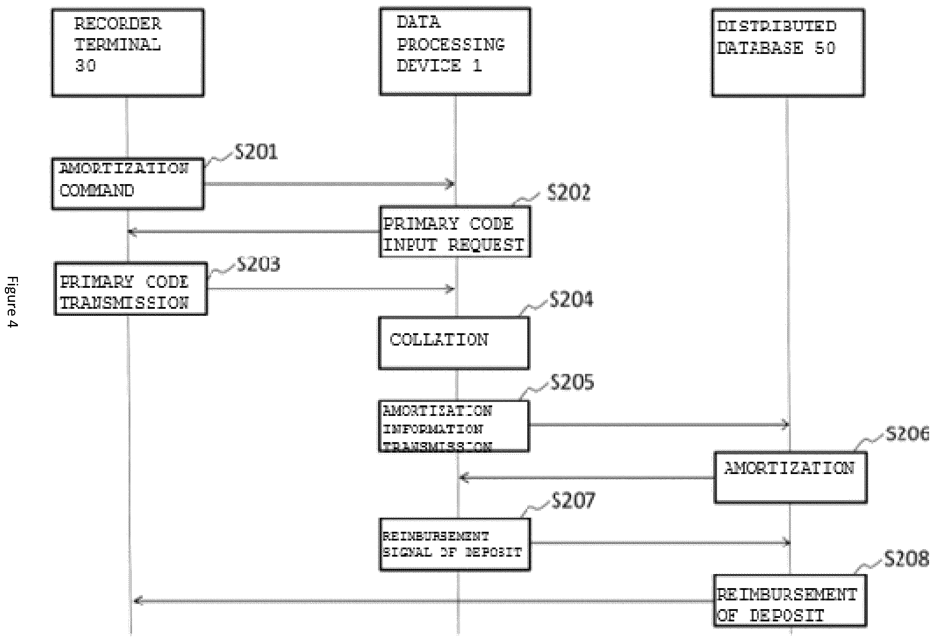

As illustrated in Fig. 4, first, the amortization command is transmitted from the recorder terminal 30 to the data processing device 1 (step S201). Subsequently, the data processing device 1 requests the recorder terminal 30 to input the primary code (step S202). The recorder terminal 30 receives the input of the primary code and transmits the primary code to the data processing device 1 (step S203). Note that steps S201 and S202 are in no particular order, and the amortization command and the primary code may be transmitted together from the recorder terminal 30. Further, steps S201 and S203 may be performed by the purchaser terminal 40. In this case, step S202 is performed for the purchaser terminal 40. Furthermore, steps S201 and S203 may be performed by a terminal operated by a person other than the purchaser, for example, an intermediary, and step S203 may be performed for the terminal.

The data processing device 1 refers to the distributed database 50 and collates a code associated with the certification data included in the amortization command with the input primary code (step S204). If the primary codes match, the data processing device 1 transmits the amortization information to the distributed database 50 (step S205). The amortization information includes at least identification information of the certification data included in the amortization command transmitted from the recorder terminal 30, the identification information of the purchaser, and information on the amount to be amortized. The distributed database 50 that has received the amortization information amortizes the amount included in the amortization information in the received certification data held by the purchaser (step S206). More specifically, the distributed database 50 changes the status of the amount from "unamortized" to "amortized". Information indicating that change of the status has been completed is transmitted from the distributed database 50 to the data processing device 1.

When all the amount included in the certification data is amortized, the data processing device 1 transmits the reimbursement signal of the deposit property to the distributed database 50 (step S207). The distributed database 50 reimburses the deposit property associated with the certification data to the recorder terminal 30 (step S208).

### •Flow of Reimbursing Deposit

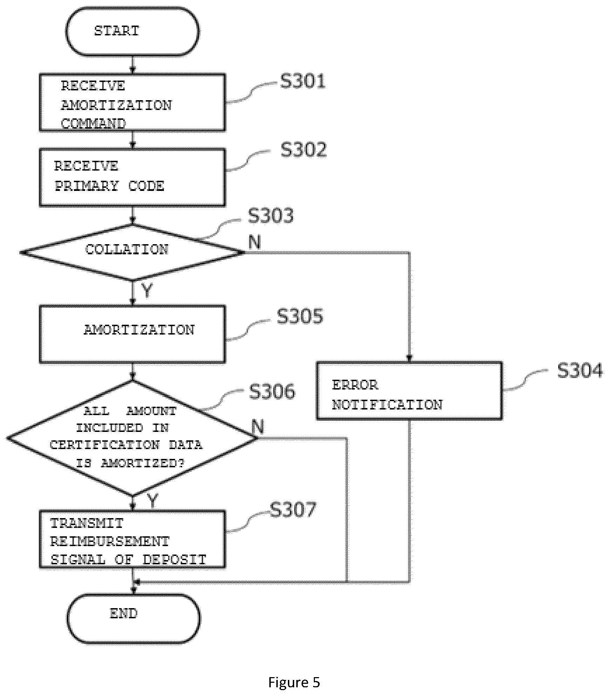

In Fig. 5, processing of the data processing device 1 related to reimbursement of the deposit will be described. As illustrated in Fig. 5, the data processing device 1 first receives the amortization command (step S301). Further, the data processing device 1 receives the primary code (step S302). Subsequently, the primary code is collated (step S303), and if the primary code does not match a primary code of the certification data included in the amortization command, an error is notified (step S304).

If the primary codes match in step S303, the amount included in the amortization command is amortized (step S305). Subsequently, it is determined whether all the amortization included in the certification data has been completed (step S306), and if all the amortization has been completed, the reimbursement signal of the deposit property is transmitted to the distributed database 50 (step S307), and if all the amortization has not been completed (N in step S306), the reimbursement of the deposit property is not performed, and the process ends.

As described above, according to the data processing method of the present invention, it is possible to realize high reliability for management of a certificate related to suppression of greenhouse gas. Eventually, it is possible to create an environment in which it is easy to deal with carbon offset without fear of fraud. Then, as a result of promotion and spread of the transaction, it contributes to countermeasures against global warming.

### Reference Signs List

- 1: Data processing device
- 11: Certification data receiving unit
- 12: Deposit receiving unit
- 13: Code issuing unit
- 14: Reference information issuing unit
- 15: Recording unit
- 16: Amortization unit
- 17: Deposit reimbursement unit
- 18: Communication processing unit
- 30: Recorder terminal
- 40: Purchaser terminal
- 50: Distributed database

## Claims

1. A data processing method, comprising,
by a computer connected to a recorder terminal and a distributed database through a network, executing:
certification data receiving processing of receiving certification data related to a reduction amount of greenhouse gas from the recorder terminal;
deposit receiving processing of receiving a deposit signal indicating deposit property deposited from the recorder terminal separately from the certification data, the deposit signal being transmitted in association with the certification data;
communication processing of transmitting a storage request of the certification data and deposit processing necessary for the storage request to the distributed database;
recording processing of receiving information of a purchaser of the certification data and recording the information of the purchaser in association with the certification data;
amortization processing of storing, in the distributed database, amortization information indicating amortization of the certification data in association with the certification data when receiving an amortization command of the certification data; and
deposit reimbursement processing of reimbursing the deposit property associated with the certification data to the recorder terminal when the amortization information is stored.

2. The data processing method according to claim 1, comprising
referring to the distributed database and not recording the certification data when the same data as the received certification data is recorded in the recording processing.

3. The data processing method according to claim 1 or 2, comprising
referring to the distributed database and not changing the certification data when the amortization information is associated with the certification data in the recording processing.

4. The data processing method according to any one of claims 1 to 3, wherein
the certification data includes information on an amount of the greenhouse gas, and the amortization command includes information on the amount to be amortized and information on the purchaser who holds the amount,
in the amortization processing, a part of the certification data is amortized on the basis of the amount included in the amortization command, and
in the deposit reimbursement processing, when all the amount included in the certification data are amortized, the deposit property associated with the certification data is reimbursed to the recorder terminal.

5. The data processing method according to any one of claims 1 to 4, comprising:
further executing code issuing processing of issuing a code associated with the certification data and transmitting the code to the recorder terminal; and
receiving an input of the code in the amortization processing, and storing the amortization information in the distributed database only when the code matches the code associated with the certification data included in the amortization command.

6. The data processing method according to any one of claims 1 to 5, comprising
storing a transfer history of the certification data in the distributed database in the recording processing.

7. A data processing device connected to a recorder terminal and a distributed database through a network, the data processing device comprising:
a certification data receiving unit configured to receive certification data related to a reduction amount of greenhouse gas from the recorder terminal;
a deposit receiving unit configured to receive a deposit signal indicating deposit property deposited from the recorder terminal separately from the certification data, the deposit signal being transmitted in association with the certification data;
a communication processing unit configured to transmit a storage request of the certification data and deposit processing necessary for the storage request to the distributed database;
a recording unit configured to receive information of a purchaser of the certification data and record, in the distributed database, the information of the purchaser in association with the certification data;
an amortization unit configured to store, in the distributed database, amortization information indicating amortization of the certification data in association with the certification data when receiving an amortization command of the certification data; and
a deposit reimbursement unit configured to reimburse the deposit property associated with the certification data to the recorder terminal when the amortization information is stored.

8. A computer program for causing a computer connected to a recorder terminal and a distributed database through a network to execute:
certification data receiving processing of receiving certification data related to a reduction amount of greenhouse gas from the recorder terminal;
deposit receiving processing of receiving a deposit signal indicating deposit property deposited from the recorder terminal separately from the certification data, the deposit signal being transmitted in association with the certification data;
communication processing of transmitting a storage request of the certification data and deposit processing necessary for the storage request to the distributed database;
recording processing of receiving information of a purchaser of the certification data and recording the information of the purchaser in association with the certification data;
amortization processing of storing, in the distributed database, amortization information indicating amortization of the certification data in association with the certification data when receiving an amortization command of the certification data; and
deposit reimbursement processing of reimbursing the deposit property associated with the certification data to the recorder terminal when the amortization information is stored.
